# EUROPÄISCHE PATENTSCHRIFT

(11) **EP 3 217 159 B1**
(45) Veröffentlichungstag und Bekanntmachung des Hinweises auf die Patenterteilung: **25.09.2019**
(21) Anmeldenummer: 17000353.7
(22) Anmeldetag: 07.03.2017
(51) Int. Cl.: G01M 5/00, G01M 99/00, G01L 1/12, G01L 1/22, E01B 35/00, B61K 9/08, G01N 29/44, G01N 29/07, G01N 27/72, G01L 1/25

(54) **VERFAHREN ZUR ERMITTLUNG DER NEUTRALTEMPERATUR IN LANGGESTRECKTEN WERKSTÜCKEN**
METHOD FOR DETERMINING THE NEUTRAL TEMPERATURE IN ELONGATED WORKPIECES
PROCÉDÉ DE DÉTERMINATION DE LA TEMPÉRATURE NEUTRE DANS DES PIÈCES USINÉES ALLONGÉES

(30) Priorität: 08.03.2016 DE 102016002692
(43) Veröffentlichungstag der Anmeldung: 13.09.2017
(73) Patentinhaber: Goldschmidt Thermit GmbH, 04349 Leipzig (DE)
(72) Erfinder: Klepel, André, D-04849 Authausen (DE); Peters, Andreas, D-04105 Leipzig (DE)
(74) Vertreter: Kramm, Dagmar

(56) Entgegenhaltungen:
- WO-A1-94/20847
- WO-A1-96/35947
- WO-A1-2014/124050
- US-A- 5 161 891
- A WEGNER: "Stress-Free temperature monitoring using different measuring technologies - experiences and assessment", PROCEEDINGS OF 10TH INTERNATIONAL HEAVY HAUL ASSOCIATION CONFERENCE, NEW DELHI, INDIA FEBRUARY 2013, 6. Februar 2013 (2013-02-06), XP055394337, New-Delhi,India
- KISHIMOTO S ET AL: "Non-contact Stress Measurement of Rail Steel Using a Magnetic Anisotropy Sensor", IEEE TRANSLATION JOURNAL ON MAGNETICS IN JAPAN, IEEE INC, NEW YORK, US, Bd. 3, Nr. 9, 1. September 1990 (1990-09-01), Seiten 762-767, XP011230572, ISSN: 0882-4959
- J. Szelazek: "Monitoring of thermal stresses in continuously welded rails with ultrasonic technique", The e-Journal of Nondestructive Testing & Ultrasonics NDTnet 1998 June, Vol. 3 No.6, 1. Juni 1998 (1998-06-01), XP055394531, Bad Breisig, Germany Gefunden im Internet: URL:http://www.ndt.net/article/dresd97/sze lazek/szelazek.htm [gefunden am 2017-07-28]

## Beschreibung

Die Erfindung bezieht sich auf ein Verfahren entsprechend dem Oberbegriff des Anspruchs 1.

Die Neutraltemperatur dieser Werkstücke - es kann sich beispielsweise um Schienen, Rohre oder andere Walzprofile handeln, beschreibt einen spannungsfreien Zustand wobei hauptsächlich an thermisch bedingte Spannungen gedacht ist. Dementsprechend ist ein Überschreiten dieser Temperatur mit Druckspannungen und ein Unterschreiten mit Zugspannungen verbunden. Im vorliegenden Fall geht es hauptsächlich um Schienen.

Bekannt in diesem Zusammenhang sind invasive Verfahren, bei denen auf der Grundlage eines Schienenschnitts mit Hilfe von Dehnmessstreifen ein Spannungszustand in der Schiene ermittelt wird. Diese Verfahren gelten vom Ergebnis her zwar als besonders zuverlässig, erfordern jedoch einen großen Aufwand, insbesondere eine Streckensperrung und stellen aus diesem Grunde nicht die bevorzugte Lösung dar.

Absolute Messverfahren wie z. B. solche auf der Grundlage einer Röntgenbeugungsanalyse setzen die Kenntnis von Materialparametern der Schienen wie z. B. der legierungsabhängigen Gitterkonstanten voraus, welche häufig nicht ohne weiteres verfügbar sind. Auch werden auf diesem Wege nur Spannungen im Oberflächenbereich detektiert, wobei sich aus einer Überlagerung von Lastspannungen mit eventuellen Eigenspannungen erhebliche Messunsicherheiten ergeben.

Für relative Messverfahren auf der Grundlage von Dehnmessstreifen oder auch von Ultraschall wird stets ein Referenzwert benötigt, der eine Kalibrierung an einem identischen spannungsfreien Schienenstück voraussetzt, welches häufig nur bei Neubaustrecken zur Verfügung steht. Die Zuverlässigkeit des Messergebnisses wird daher maßgeblich durch Unsicherheiten hinsichtlich der Eignung des benutzten Referenzwertes beeinflusst.

Aus WO 96/35947 A1 sowie aus A. WEGNER: "Stress-Free temperature monitoring using different measuring technologies- experiences and assessment", PROCEEDINGS OF 10TH INTERNATIONAL HEAVY HAUL ASSOCIATION CONFERENCE, NEW DEHLI, INDIA, FEBRUARY 2013, ist ein ein Verfahren zur Bestimmung der neutralen Temperatur von Gleisen bekannt, wobei das Gleis in einem Tonfrequenzbereich in Längsrichtung magnetisch erregt wird, wobei anhand von in verschiedenen Zuständen einer Längsspannung eine Kalibrationskurve, nämlich die funktionale Abhängigkeit eines ein magnetisches Barkhausen Rauschen beschreibenden Signals von der Längsspannung aufgenommen wird, wobei mittels dieser Kalibrationskurve an mehreren Messpunkten ein Signal des Barkhausen-Rauschens aufgenommen und durch Mittelwertbildung die Längsspannung ermittelt wird und wobei unter Berücksichtigung eines Elastizitätsmoduls, eines Dilatationsfaktors und der Temperatur des Gleises die neutrale Temperatur ermittelt wird.

Diesem vorstehend zitierten Stand der Technik liegt stets die Aufnahme von Kalibrationskurven zugrunde, ein Vorgang der zeit- und damit kostenaufwändig ist

Bei den aus den Druckschriften US 2015 0377 836 A1 und US 2014 0316 719 A1 bekannten Verfahren entfällt die Notwendigkeit einer Kalibrierung, wobei ein Ultraschallsignal in den auf Längsspannungen hin zu prüfenden Schienenkörper eingeleitet wird, wobei ein Antwortsignal ausgewertet wird und wobei aus dem Verlauf eines Parameters des Antwortsignals in Abhängigkeit von der Schienentemperatur die Neutraltemperatur anhand des Verlaufs dieser Abhängigkeit ermittelt wird. Nachteilig an diesen bekannten Verfahren ist, dass die Messungen über einen mehr oder weniger großen Temperaturbereich durchgeführt werden müssen und nur dann zu einem Erfolg führen, wenn die Neutraltemperatur sich innerhalb dieses Temperaturbereichs befindet. Dies kann zu beträchtlichen Messzeiten führen, wobei sich das weitere Problem ergibt, dass nicht sicher ist, dass sich der Gleisoberbauzustand innerhalb dieser Messzeiten nicht ändert. Hinzutritt, dass Messungen mit Oberflächenwellen nur Spannungszustände an der Schienenoberfläche erfassen, so das ein Messergebnis durch Eigenspannungen verfälscht sein kann.

Aus der US 5 386 727 ist ein nicht invasives Verfahren zur Ermittlung der örtlichen Neutraltemperatur einer zu verschweißenden Schienenverbindung bekannt, wobei Längsspannungen in einem Gleis mittels eines gepulsten Signals eines Ultraschallsenders ermittelt werden, welches nach Maßgabe der aktuellen Längsspannungen des Gleises in modifizierter Form empfangen wird, wobei die Neutraltemperatur ausgehend von diesem empfangenen Signal, der jeweiligen Schienentemperatur sowie den vorhandenen Schienenstößen, insbesondere den bestehenden Spalten zwischen stirnseitig einander gegenüberstehenden Schienenenden analytisch ermittelt wird.

Aus der WO 2005/044504 A1 ist ein Verfahren zum Verschweißen zweier Schienenenden eines Gleises bekannt, wobei die beiden jeweils durch ein Klemmbackenpaar einer Schweißmaschine erfassten Schienenenden in Längsrichtung des Gleises bewegt und miteinander verschweißt werden, wobei für den Fall einer Abweichung der aktuellen Schienentemperatur von einer örtlichen Neutraltemperatur und nach Maßgabe dieser Abweichung mechanische Spannungen in die zu verschweißenden Schienenenden eingeleitet werden und wobei mittels einer Schienendrückvorrichtung in das, der Schweißstelle abgekehrte Ende des einen der beiden Schienenenden eine Druckkraft zur Erzeugung einer Druckspannung eingeleitet wird. Auf diese Weise soll erreicht werden, dass eine Verschweißung auch oberhalb einer Neutraltemperatur möglich ist.

Aus der US 5 099 097 ist ein Schweißaggregat bekannt, bei welchem mittels einer Einleitung von Zugkräften in die zu verschweißenden Schienenenden eine Verschweißung auch unterhalb einer Neutraltemperatur möglich ist.

Nachteilig an diesen bisher bekannten Verfahren ist, dass diese eine Kalibrierung erforderlich machen, nicht zerstörungsfrei durchführbar sind, eine Kenntnis der Werkstoffparameter der untersuchten Schienen voraussetzen, sich zeitlich langwierig gestalten mit dem hiermit einhergehenden Risiko von Temperaturänderungen während der Messzeit, oder durch Eigenspannungen verfälscht werden und damit nicht nutzbar sind.

Es ist die Aufgabe der Erfindung, ein Verfahren der eingangs bezeichneten Art im Vergleich zu dem vorstehend dargelegten Stand der Technik hinsichtlich seiner Durchführung zu vereinfachen, insbesondere dahingehend, dass dieses ohne eine Kenntnis der Materialparameter, ohne Kalibrierung, ohne Referenzwerte, ohne eine Beeinflussung durch Eigenspannungen, ohne eine Beschränkung auf Oberflächenbereiche sowie in vergleichsweise kurzer Zeit durchführbar ist. Gelöst ist diese Aufgabe bei einem solchen Verfahren alternativ durch die Merkmale der Kennzeichnungsteile der Ansprüche 1 und 2.

Erfindungswesentlich ist hiernach die Auswertung eines durch den Wert einer Längsspannung in dem Werkstück beeinflussten Signals oder Signalfolge, welches / welche den zu untersuchenden, in definierter Weise unter Längsspannungen gesetzten Schienenabschnitt im wesentlichen quer zu dessen Längserstreckung durchlaufen hat und die Aufnahme einer Funktion, welche die Abhängigkeit zwischen einem Parameter dieses Signals und der Längsspannung beschreibt. Es handelt sich hierbei um einen solchen Parameter, der längsspannungsabhängig ist, wobei aus dem Verlauf dieser Funktion der spannungsfreie Zustand ermittelbar ist. Grundsätzlich kann hierzu jeder Parameter des Signals benutzt werden, welcher sich längsspannungsabhängig verändert. Ein wesentlicher Vorteil gegenüber dem eingangs dargelegten Stand der Technik ist darin zu sehen, dass lediglich die in das Werkstück eingeleitete Längsspannung über einen bestimmten, nämlich den spannungsfreien Zustand beinhaltenden Bereich geändert werden muss und nicht die lediglich einmal gemessene Temperatur. Das erfindungsgemäße Verfahren ist aus diesem Grunde in wesentlich kürzerer Zeit durchführbar, da es faktisch lediglich auf den Werten der in das Werkstück eingeleiteten Längsspannung und denjenigen des zu betrachtenden Parameters des ausgekoppelten Signals aufbaut. Es werden somit keine langen Messzeiträume benötigt. Für das Verfahren entfallen eine Kalibrierung und gleichermaßen Referenzwerte und es wird das Verfahrensergebnis nicht durch Eigenspannungen im Werkstück beeinflusst. Schließlich entfällt auch die Notwendigkeit einer Kenntnis von Materialparametern.

Bei dem genannten Signal handelt es sich nach dem Kennzeichnungsteil des Anspruchs 1 um ein magnetisches Signal bzw. eine magnetische Signalfolge, so dass magnetische Eigenschaften des zu untersuchenden Werkstücks die Grundlage des Verfahrens bilden, nämlich ein Funktionszusammenhang zwischen Längsspannungen und magnetischen Eigenschaften. Ermittelt wird ein spannungsfreier Zustand anhand einer Funktion, welche den Zusammenhang zwischen einem auf das magnetische Eingangssignal hin empfangenen magnetischen Antwortsignal und der in das Werkstück eingeleiteten Längsspannung beschreibt.

Für das Verfahren kann der Umstand benutzt werden, dass die Hauptrichtung eines äußeren erregenden magnetischen Feldes und die Hauptrichtung einer durch dieses induzierten Magnetisierung des Werkstücks bei Erreichen eines spannungsfreien Zustands übereinanderliegen, sich ansonsten aber unterscheiden. Die Auswertung des Verfahrens ist in diesem Fall von dem in der Empfangsspule empfangenen Signal abhängig, welches in einer diese Abhängigkeit beschreibenden Funktion visuell darstellbar ist, wobei das Verfahrensergebnis, nämlich die Feststellung des spannungsfreien Zustands von dieser Funktion abgeleitet wird. Das in der Empfangsspule induzierte Signal wird gemäß einem mathematischen Modell verarbeitet und in einer Funktion ausgewertet. Alternativ zu einer Empfangsspule kann ein Empfänger auch durch andere Magnetfeldsensoren realisiert werden. In Betracht kommen dazu unter anderem z. B. GMR-Sensoren (giant magnetoresistive sensors), Hall-Effekt-Sensoren oder AMR-Sensoren (anisotrope magnetoresistive sensors).

Zur Durchführung des Verfahrens werden Transversalwellen, beispielsweise in der Form von Wellenpaketen in das repräsentative Volumen eingebracht. Diese können praktisch durch Beugung und Brechung von Schallwellen, durch Modenkonversion, durch Piezowandler oder durch Systeme der EMAT-Technologie (Electromagnetic Acoustic Transducer) bereitge-stellt werden. Letztere weisen den Vorteil auf, dass zwischen einem Prüfkopf und dem zu untersuchenden Werkstück kein Kontaktmittel erforderlich ist.

Die Signalfolge wird in den Schienenabschnitt mittels einer Sendespule und einer Empfangsspule geführt, deren Achsen sich unter einem Winkel von 90° zueinander und zu der Längsachse des Schienenabschnittes unter Winkeln von 45° erstrecken.

Die Merkmale des Kennzeichnungsteils des Anspruchs 2 sind auf einen alternativen Lösungsansatz gerichtet, bei dem das genannte Signal durch ein Ultraschallsignal bzw. eine Ultraschallsignalfolge dargestellt ist, so dass aus dem Prüfabschnitt ein Ultraschallsignal als Antwortsignal ausgekoppelt wird, welches längsspannungsabhängig ist, so dass das Verfahren auf der Ermittlung einer Funktion aufbaut, welche den Zusammenhang zwischen diesem Signal und der jeweils eingeleiteten Längsspannung beschreibt.

Auch bei der vorstehend dargelegten Alternativlösung ergeben sich gegenüber dem eingangs vorgestellten Stand der Technik vergleichbare Vorteile.

Zur Durchführung des Verfahrens kommen Elementketten bestehend aus Ultraschallsendern und Ultraschallempfängern in Betracht, die quer zur Längserstreckung des Werkstücks einander gegenüberliegend angeordnet sind, so dass der zwischen diesen liegende Abschnitt des Werkstücks das repräsentative Volumen bildet.

Faktisch wird das ausgekoppelte Ultraschallsignal in zahlreichen Parametern durch die jeweils herrschende Längsspannung beeinflusst, so dass unterschiedliche Lösungsansätze aufbauend auf unterschiedlichen Parametern möglich sind.

Entsprechend den Merkmalen der Ansprüche 3 und 4 können beispielsweise die Polarisationswinkel von Ultraschallsendern und Ultraschallempfängern relativ zu der Längsrichtung des Werkstücks fest eingestellt oder in definierten Winkelbereichen variabel sein.

Anwendbar ist das erfindungsgemäße Verfahren in der Form der magnetischen Variante insbesondere bei ferromagnetischen Werkstücken, nämlich Profilwerkstücken wie Eisenbahnschienen, Blechen, Rohren und Draht, allgemein bei metallischen Werkstücken mit einer ausgedehnten, z. B. durch Kaltwalzen hergestellten Längsstruktur und bei geflochtenen oder verdrillten Werkstücken wie Stahlseilen.

Die auf Ultraschallbasis eingerichtete Verfahrensvariante ist darüber hinaus allgemein auch bei Werkstücken mit einer Faserstruktur wie z. B. Holzbalken, Verbundwerkstoffen usw. anwendbar.

Die Erfindung wird im Folgenden unter Bezugnahme auf die beiliegenden Zeichnungen näher erläutert werden. Es zeigen:
- Fig. 1: eine schematische Darstellung einer erfindungsgemäßen Messanordnung auf Ultraschallbasis;
- Fig. 2: eine schematische Darstellung eines magnetischen Sensoraufbaus;
- Fig. 3: eine grafische Darstellung zur Ermittlung des spannungsfreien Zustands der Schiene auf der Grundlage einer Laufzeitmessung mit Ultraschallwellen;
- Fig. 4: eine grafische Darstellung zur Ermittlung des spannungsfreien Zustands der Schiene auf der Grundlage deren Magnetisierung;
- Fig. 5 bis Fig. 11: alternative Anordnungen von zur Einkopplung eines Magnetfeldes in das zu untersuchende Schienenprofil sowie eines Antwortsignals bestimmter Sender- und Empfängermodule;

Fig. 12 isolierte Teildarstellungen des magnetischen Sensoraufbaus gemäß Fig. 2

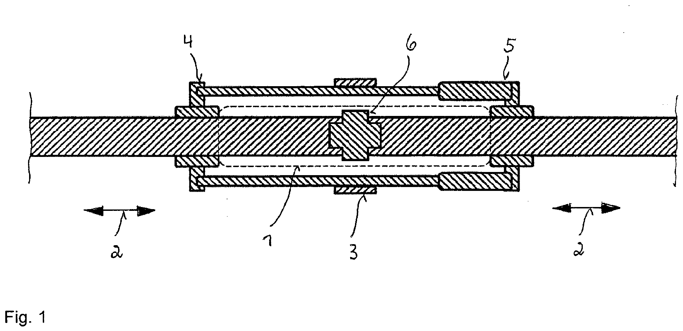

Mit 1 ist in Fig. 1 ein Schienenabschnitt bezeichnet, der unter Anwendung des erfindungsgemäßen Verfahrens hinsichtlich vorhandener Längsspannungen, insbesondere einer Neutraltemperatur untersucht werden soll.

Zeichnerisch nicht dargestellt ist eine Vorrichtung, die dazu bestimmt und eingerichtet ist, in diesen Schienenabschnitt 1 äußere Längsspannungen in Richtung der Pfeile 2 einzuleiten. Derartige Vorrichtungen als solche sind jedoch bekannt, so dass sich ein näheres Eingehen auf deren Beschaffenheit erübrigt. Diese Längsspannungen werden gleichförmig beidseitig in den Schienenabschnitt 1 eingebracht.

Mit 3 ist ein Gerät zur Messung der eingeleiteten äußeren Längsspannung bezeichnet, welches über Klemmbacken 4, 5 mit dem Schienenabschnitt 1 in Verbindung steht.

Im Folgenden werden beispielhaft zwei Ausführungsformen von Sensoranordnungen 6 zur Bestimmung des spannungsfreien Zustands beschrieben, nämlich eine solche auf der Basis wechselnder Magnetfelder nach Anspruch 1 und eine solche auf der Basis von Ultraschallwellen nach Anspruch 2.

Mit 7 ist ein Ultraschallsender bezeichnet, welcher mit einer Mittenfrequenz von 1 MHz bis 10 MHz Transversalpakete in einer definierten Polarisationsrichtung relativ zu der Längsachse des Schienenabschnitts 1 einbringt, welche sich innerhalb eines repräsentativen Volumens des Schienenwerkstoffs senkrecht zu dessen Oberfläche ausbreiten und schließlich von einem Ultraschallempfänger 8 detektiert werden. Das auf diesem Wege durchschallte Volumen des Schienenwerkstoffs wird durch die Positionierung des Ultraschallsenders 7 sowie des Ultraschallempfängers 8 festgelegt und befindet sich innerhalb des Schienenabschnitts 1.

Auf die Darstellung eines Geräts zur Messung der Schienentemperatur ist verzichtet worden. Eine solche Messung ist jedoch nur einmal erforderlich.

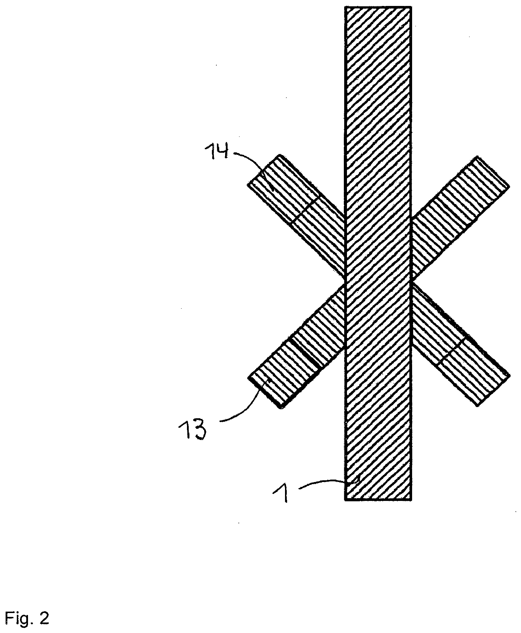

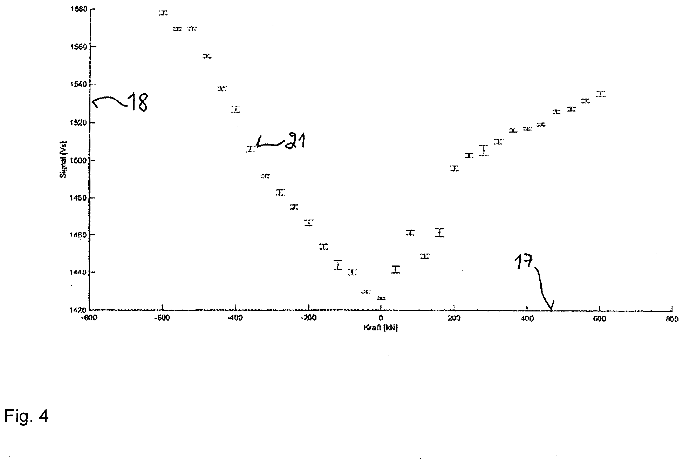

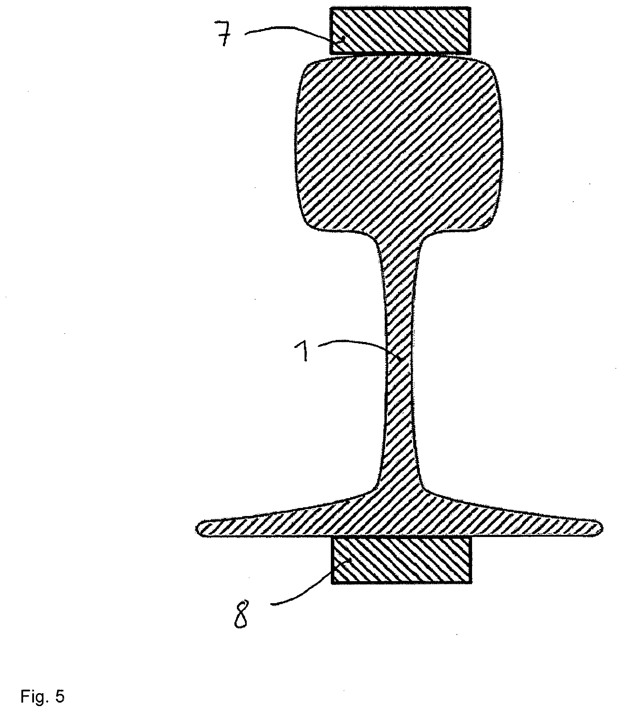

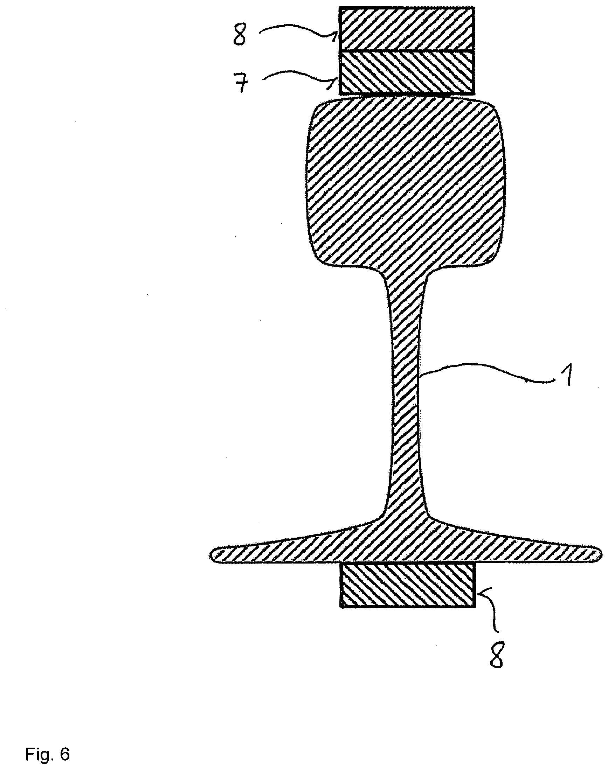

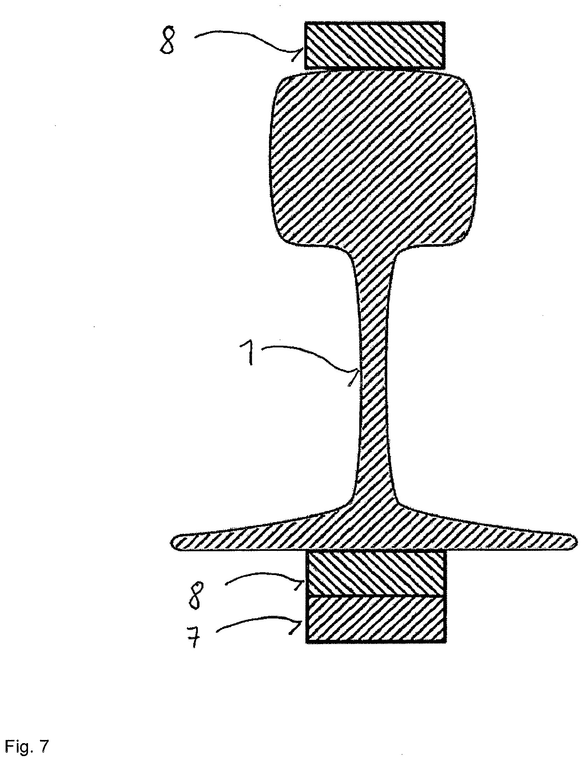

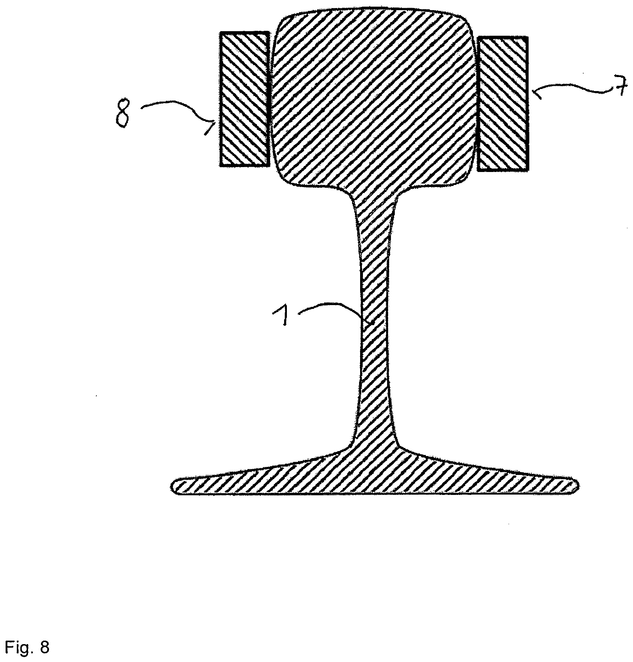

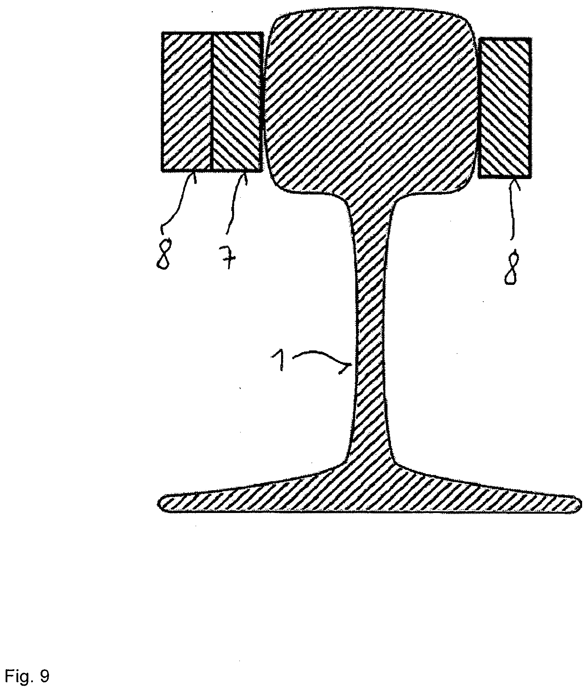

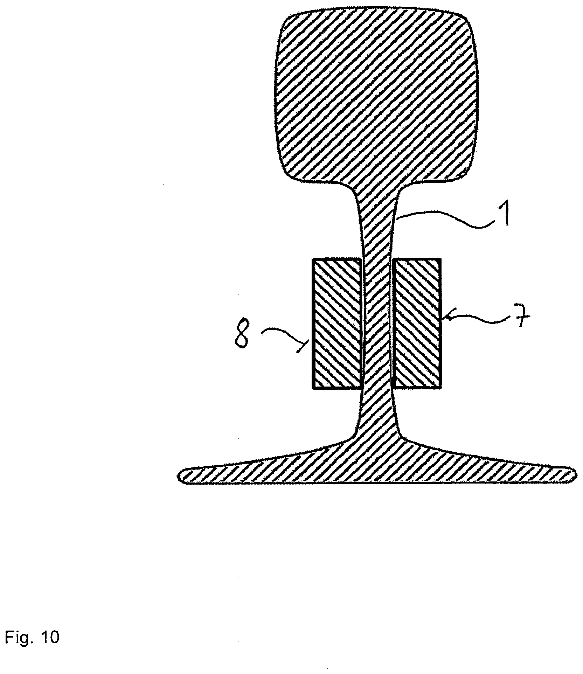

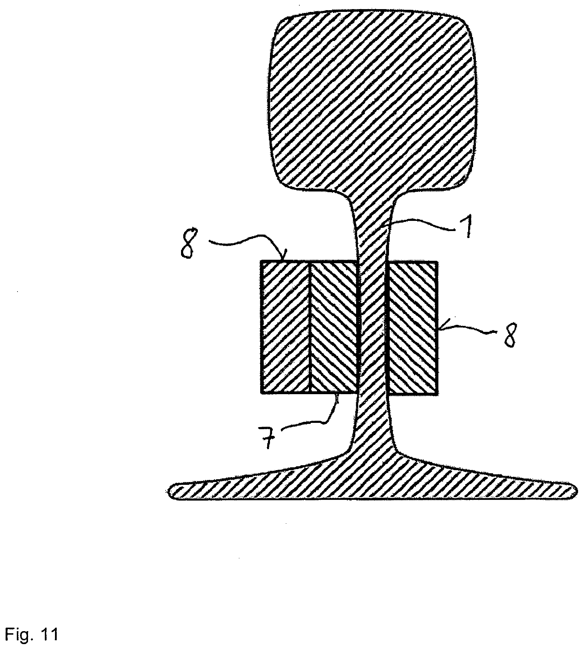

Die Figuren 2 bis 11 zeigen mögliche Positionen der Ultraschallsender 7 sowie der Ultraschallempfänger 8 relativ zu einem Querschnittsprofil 9 des Schienenabschnitts 1. Wesentlich ist insoweit, dass sich Ultraschallsender 7 und Ultraschallempfänger 8 in einer einander gegenüberliegenden Anordnung befinden. Die Empfänger können grundsätzlich auch auf beiden Seiten des repräsentativen Volumens vorhanden sein. Auf diese Weise können auch reflektierte Signalanteile empfangen werden. Schließlich können die beiden Empfänger auch zum Empfang unterschiedlich polarisierter Transversalwellen eingerichtet sein.

Das der Messung zugrundeliegende Prinzip besteht darin, dass das von dem Ultraschallempfänger 8 detektierte Signal abhängig ist von den Winkeln zwischen der Schienenlängsachse und den Polarisationsrichtungen von Sender und Empfänger sowie einer Schienenlängsspannung jedoch unabhängig von einer Kalibrierung und gleichermaßen von Materialparametern. Zwischen dem Winkel, den die Schienenlängsachse mit den Polarisationsrichtungen bildet und dem Betrag einer Längsspannung in dem Schienenabschnitt besteht ein nicht linearer Zusammenhang. Hinzutritt, dass die Messungen nicht durch einen Eigenspannungsanteil beeinflusst werden, wobei sich der Zeitbedarf in Abhängigkeit von dem gemessenen Spannungsbereich und dem für die Einleitung von mechanischen Spannungen in den Schienenabschnitt nach Maßgabe der hierzu eingesetzten Vorrichtung auf wenige Minuten beschränkt.

Die Messungen können mit fest eingestellten Winkeln zwischen den Polarisationsrichtungen und der Schienenlängsachse durchgeführt werden. In Betracht kommen jedoch auch Messungen mit festen Winkeln von beispielsweise 0°, 45°, 90° oder ein Durchfahren eines Winkelbereichs von beispielsweise 0°bis 90°.

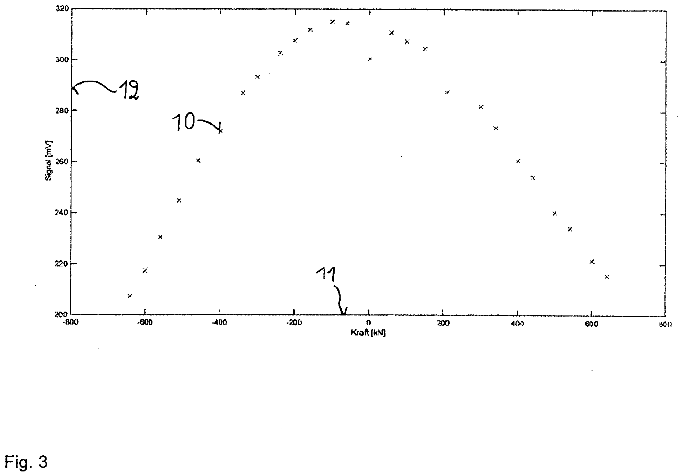

Fig. 3 zeigt die Ermittlung der Neutraltemperatur bzw. des spannungsfreien Zustands anhand der analytischen Ermittlung des Maximums der dort gezeigten Funktion 10, auf deren Abszisse 11 die in den Schienenabschnitt eingeleitete Kraft aufgetragen ist. Auf der Ordinate 12 aufgetragen ist ein längsspannungsabhängiger Parameter, z. B. eine Laufzeitverschiebung zwischen dem gesendeten und dem empfangenen Signal, wobei jedoch auch andere Parameterunterschiede zwischen diesen beiden Signalen benutzt werden können. Das Maximum der Funktion 10 zeigt die Lage des spannungsfreien Zustands und damit der Neutraltemperatur an.

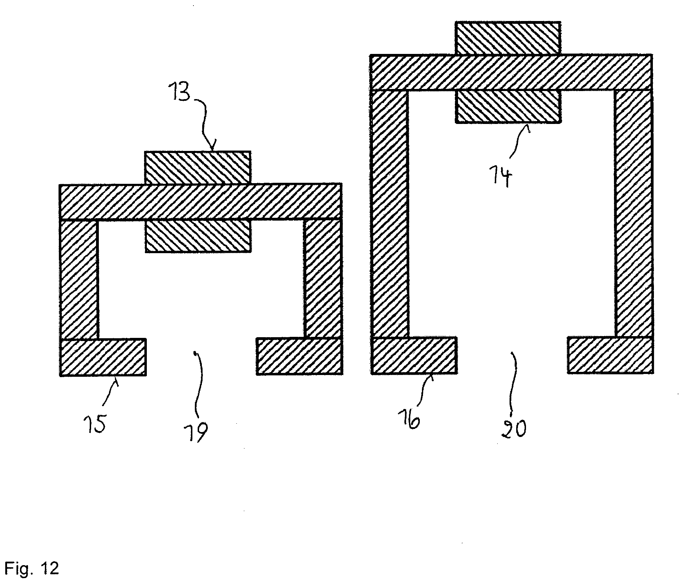

Anstelle einer Anordnung bestehend aus Ultraschallsendern 6 und Ultraschallempfängern 8 kann auch eine magnetisch-induktive Anordnung benutzt werden. Grundlage dieser Messanordnung ist, dass nahezu alle magnetischen Eigenschaften ferromagnetischer Werkstoffe durch eine äußere mechanische Spannung beeinflusst werden. Hierzu wird auf die Figuren 2 und 12 Bezug genommen, in denen Funktionselemente, die mit denjenigen der Figuren 1 und 3 bis 11 übereinstimmen, entsprechend beziffert sind.

Mit 13 ist eine Sendespule bezeichnet, deren Achse sich unter einem Winkel von 45° zur Schienenlängsachse des Schienenabschnitts 1 erstreckt. Durch sie wird der Schienenabschnitt 1 einem magnetischen Wechselfeld ausgesetzt, durch welches in diesem als Antwort auf diese magnetische Erregung eine Magnetisierung induziert wird, deren Richtung und Intensität durch das erregende äußere Magnetfeld sowie durch die in dem Schienenabschnitt vorliegende mechanische Spannung, hier Längsspannung beeinflusst wird.

Mit 14 ist eine Empfangsspule bezeichnet, deren Achse sich unter 90° zu derjenigen der Sendespule 13 erstreckt.

Sowohl die Sendespule 13 als auch die Empfangsspule 14 sind jeweils in einen, den Schienenkopf des Querschnittsprofils des Schienenabschnitts 1 einbeziehenden magnetischen Kreis eingebunden, so dass ein durch die Empfangsspule 14 empfangenes Signal durch den Schienenkopf beeinflusst wird.

In Fig. 12 werden zwei magnetische Kreise 15, 16 gezeigt, die als Träger der Sendespule 13 bzw. der Empfangsspule 14 fungieren und jeweils eine Lücke 19, 20 aufweisen, die zur Aufnahme des diese Kreise komplettierenden Schienenkopfes des Schienenabschnitts 1 eingerichtet ist. Im eingesetzten Zustand erstrecken sich die Grundebenen der magnetischen Kreise unter 45° zu der Schienenlängsachse und unter 90° zueinander.

Im Betrieb dieser magnetisch-induktiven Messanordnung wird das von der Empfangsspule 14 eingekoppelte Signal ausgewertet, und zwar insbesondere auf Abweichungen zwischen der Magnetisierung und dem äußeren Magnetfeld hin. Der spannungsfreie Zustand des Schienenabschnitts liegt vor, wenn Magnetisierung und äußeres Magnetfeld übereinanderliegen.

Die Auswertung des über die Empfangsspule 14 empfangenen Signals kann nach einem mathematischen Modell erfolgen, dessen Auswertungsergebnis in Fig. 3 grafisch dargestellt ist. Auf der Abszisse 17 sind die in den Schienenabschnitt 1 eingeleiteten Kräfte aufgetragen, während auf der Ordinate 18 das Antwortsignal der Empfangsspule 14 aufgetragen ist. Die Folge der ermittelten Messpunkte beschreibt eine Funktion 21, deren Minimum die Lage des spannungsfreien Zustands und damit der Neutraltemperatur beschreibt.

Auch diese Verfahrensvariante ist in wenigen Minuten durchführbar, wobei weder eine Kalibrierung noch eine Kenntnis der Werkstoffparameter des Schienenabschnitts 1 benötigt werden.

### Bezugszeichenliste:

- 1.: Schienenabschnitt
- 2.: Pfeile
- 3.: Gerät
- 4.: Klemmbacke
- 5.: Klemmbacke
- 6.: Sensoranordnung
- 7.: Ultraschallsender
- 8.: Ultraschallempfänger
- 9.: Querschnittsprofil
- 10.: Funktion
- 11.: Abszisse
- 12.: Ordinate
- 13.: Sendespule
- 14.: Empfangsspule
- 15.: magnetischer Kreis
- 16.: magnetischer Kreis
- 17.: Abszisse
- 18.: Ordinate
- 19.: Lücke
- 20.: Lücke
- 21.: Funktion

## Patentansprüche

1. Verfahren zur Ermittlung der Neutraltemperatur bzw. des spannungsfreien Zustands eines Schienenabschnitts (1), wobei der Schienenabschnitt (1) unter äußere Längsspannungen gesetzt wird, wobei der Spannungszustand in dem Schienenabschnitt (1) mittels eines mit dem Schienenabschnitt (1) mittels zweier Klemmbacken (4, 5) in Verbindung stehenden Gerätes (3) erfasst wird und als Grundlage für die Ermittlung der Neutraltemperatur verwendet wird, **dadurch gekennzeichnet, dass** eine Sendespule (13) sowie eine Empfangsspule (14) mit der Maßgabe an dem Schienenabschnitt (1) eingesetzt werden, dass sich deren Achsen unter einem Winkel von 90° zueinander und zu der Längsachse des Schienenabschnitts (1) unter Winkeln von 45° erstrecken, dass der Schienenabschnitt (1), welcher ein Element eines magnetischen, zumindest die Sendespule (13) und die Empfangsspule (14) umfassenden, durch den Schienenkopf des Schienenabschnitts (1) komplettierten Kreises ist, einem magnetischen Wechselfeld ausgesetzt wird, durch welches in dem Schienenabschnitt eine Magnetisierung induziert wird, deren Richtung und Intensität durch das erregende äußere Magnetfeld sowie durch die in dem Schienenabschnitt (1) vorliegende Längsspannung beeinflusst wird, dass die Temperatur nur einmal gemessen wird, dass in den Schienenabschnitt (1) Längsspannungen eingeleitet werden, welche über einen, den spannungsfreien Bereich beinhaltenden Bereich geändert werden, dass_im wesentlichen quer zu der Längsrichtung des Schienenabschnitts (1), diesen durchlaufend, ein durch den Wert der Längsspannung beeinflusstes Signal oder eine Signalfolge eingekoppelt werden, wobei ein aus dem Schienenabschnitt (1) ausgekoppeltes Signal ausgewertet wird, wobei eine die funktionale Abhängigkeit eines Parameters des ausgekoppelten magnetischen Signales von der jeweiligen Längsspannung beschreibende Funktion (21) ermittelt wird, und wobei anhand eines Extremwertes dieser Funktion (21) unter Berücksichtigung der während der Messung anstehenden Temperatur der spannungsfreie Zustand sowie die Neutraltemperatur unter Berücksichtigung der lediglich einmal gemessenen Temperatur ermittelt werden.

2. Verfahren zur Ermittlung der Neutraltemperatur bzw. des spannungsfreien Zustands eines Schienenabschnitts (1), wobei der Schienenabschnitt (1) unter äußere Längsspannungen gesetzt wird, wobei der Spannungszustand in dem Schienenabschnitt (1) mittels eines mit dem Schienenabschnitt (1) mittels zweier Klemmbacken (4, 5) in Verbindung stehenden Gerätes (3) erfasst wird, und als Grundlage für die Ermittlung der Neutraltemperatur verwendet wird, **dadurch gekennzeichnet, dass** in den_Schienenabschnitts (1), nämlich zwischen einem Sender (7) und einem diesem in Querrichtung zu der Längsrichtung des Schienenabschnitts (1) gegenüberliegenden Empfänger (8), ein Ultraschallsignal oder eine Folge von Ultraschallsignalen eigekoppelt wird, dass eine in den Schienenabschnitt (1) eingeleitete Längsspannung über einen, den spannungsfreien Zustand beinhaltenden Bereich geändert wird, wobei die Temperatur lediglich einmal gemessen wird, dass eine die funktionale Abhängigkeit eines Parameters des ausgekoppelten Ultraschallsignals von der jeweiligen Längsspannung beschreibende Funktion (10) ermittelt wird, dass anhand des Maximums dieser Funktion (10) der spannungsfreie Zustand sowie die Neutraltemperatur ermittelt werden, wobei in dem Schienenabschnitt (1) Ultraschallsignale in der Form von Transversalwellen verwendet werden und wobei die Auswertung des ausgekoppelten Ultraschallsignales unter Berücksichtigung der Polarisationswinkel von Sender (7) und Empfänger (8) relativ zu der der Längsachse des Schienenabschnitts (1) durchgeführt wird.

3. Verfahren nach Anspruch 2, **dadurch gekennzeichnet, dass** die Ermittlung der Neutraltemperatur mit fest eingestellten Polarisationswinkeln durchgeführt wird.

4. Verfahren nach Anspruch 2, **dadurch gekennzeichnet, dass** die Ermittlung der Neutraltemperatur mit innerhalb eines Winkelbereichs von 0° bis 90° veränderlichen Polarisationswinkeln durchgeführt wird.

## Claims

1. Method for determining the neutral temperature or the stress-free state of a rail section (1), wherein the rail section (1) is subjected to external longitudinal stresses, wherein the state of stress in the rail section (1) is detected by means of an apparatus (3) connected to the rail section (1) by means of two clamping jaws (4, 5) and is used as the basis for determining the neutral temperature, **characterised in that** a transmission coil (13) and a receiving coil (14) are used on the rail section (1) with the proviso that the axes thereof extend at an angle of 90° to one another and at angles of 45° to the longitudinal axis of the rail section (1), that the rail section (1), which is an element of a magnetic circuit comprising at least the transmission coil (13) and the receiving coil (14) and completed by the rail head of the rail section (1), is exposed to an alternating magnetic field by which, in the rail section, magnetisation is induced, the direction and intensity of which are influenced by the exciting external magnetic field and by the longitudinal stress present in the rail section (1), that the temperature is measured only once, that longitudinal stresses, which are changed over a range including the stress-free range, are introduced into the rail section (1), that a signal, influenced by the value of the longitudinal stress, or a signal sequence are coupled substantially transverse to the longitudinal direction of the rail section (1), passing therethrough, wherein a signal decoupled from the rail section (1) is evaluated, wherein a function (21) describing the functional dependency of a parameter of the decoupled magnetic signal on the respective longitudinal stress is determined, and wherein, with the aid of an extreme value of this function (21) under consideration of the temperature during the measurement, the stress-free state and the neutral temperature are determined under consideration of the temperature measured only once.

2. Method for determining the neutral temperature or the stress-free state of a rail section (1), wherein the rail section (1) is subjected to external longitudinal stresses, wherein the state of stress in the rail section (1) is detected by means of an apparatus (3) connected to the rail section (1) by means of two clamping jaws (4, 5) and is used as the basis for determining the neutral temperature, **characterised in that** an ultrasonic signal or a sequence of ultrasonic signals is coupled into the rail section (1), specifically between a transmitter (7) and a receiver (8) opposite said transmitter in the direction transverse to the longitudinal direction of the rail section (1), that a longitudinal stress introduced into the rail section (1) is changed over a range including the stress-free state, wherein the temperature is measured only once, that a function (10) describing the functional dependency of a parameter of the decoupled ultrasonic signal on the respective longitudinal stress is determined, that the stress-free state and the neutral temperature are determined with the aid of the maximum of this function (10), wherein ultrasonic signals in the form of transverse waves are used in the rail section (1) and wherein the evaluation of the decoupled ultrasonic signal is carried out under consideration of the polarisation angles of the transmitter (7) and receiver (8) relative to the longitudinal axis of the rail section (1).

3. Method as claimed in claim 2, **characterised in that** the determination of the neutral temperature is carried out with fixedly set polarisation angles.

4. Method as claimed in claim 2, **characterised in that** the determination of the neutral temperature is carried out with polarisation angles which can be changed within an angular range of 0° to 90°.

## Revendications

1. Procédé servant à déterminer la température neutre ou l'état sans tension d'une section de rail (1), dans lequel la section de rail (1) est placée sous des tensions longitudinales extérieures, dans lequel l'état de tension dans la section de rail (1) est détecté au moyen d'un appareil (3) relié à la section de rail (1) au moyen de deux mâchoires de serrage (4, 5) et est utilisé en tant que base pour la détermination de la température neutre, **caractérisé en ce qu'**une bobine d'envoi (13) ainsi qu'une bobine de réception (14) sont employées au niveau de la section de rail (1) à condition que leurs axes s'étendent selon un angle de 90° l'un par rapport à l'autre et par rapport à l'axe longitudinal de la section de rail (1) selon des angles de 45°, que la section de rail (1), laquelle est un élément d'un circuit magnétique comprenant au moins la bobine d'émission (13) et la bobine de réception (14), complété par la tête de rail de la section de rail (1), est soumise à un champ alternatif magnétique, par lequel une aimantation est induite dans la section de rail, la direction et l'intensité de laquelle sont influencées par le champ magnétique extérieur d'excitation ainsi que par la tension longitudinale présente dans la section de rail (1), que la température est mesurée seulement une fois, que sont introduites dans la section de rail (1) des tensions longitudinales, lesquelles sont modifiées sur une zone contenant la zone sans tension, qu'un signal influencé par la valeur de la tension longitudinale ou une séquence de signaux sont injectés sensiblement de manière transversale par rapport à la direction longitudinale de la section de rail (1) en la traversant, dans lequel un signal extrait de la section de rail (1) est évalué, dans lequel une fonction (21) décrivant la dépendance fonctionnelle d'un paramètre du signal magnétique extrait de la tension longitudinale respective est déterminée, et dans lequel l'état sans tension ainsi que la température neutre sont déterminés en tenant compte de la température mesurée seulement une fois à l'aide d'une valeur extrême de ladite fonction (21) en tenant compte de la prochaine température pendant la mesure.

2. Procédé servant à déterminer la température neutre ou l'état sans tension d'une section de rail (1), dans lequel la section de rail (1) est placée sous des tensions longitudinales extérieures, dans lequel l'état de tension est détecté dans la section de rail (1) au moyen d'un appareil (3) relié à la section de rail (1) au moyen de deux mâchoires de serrage (4, 5), et est utilisé en tant que base pour la détermination de la température neutre, **caractérisé en ce qu'**un signal ultrasonore ou une séquence de signaux ultrasonores sont injectés dans la section de rail (1), à savoir entre un émetteur (7) et un récepteur (8) lui faisant face dans la direction transversale par rapport à la direction longitudinale de la section de rail (1), qu'une tension longitudinale introduite dans la section de rail (1) est modifiée sur une zone contenant l'état sans tension, dans lequel la température est mesurée seulement une fois, qu'une fonction (10) décrivant la dépendance fonctionnelle d'un paramètre du signal ultrasonore extrait de la tension longitudinale respective est déterminée, que l'état sans tension ainsi que la température neutre sont déterminés à l'aide du maximum de cette fonction (10), dans lequel des signaux ultrasonores sont utilisés dans la section de rail (1) sous la forme d'ondes transversales et dans lequel l'évaluation du signal ultrasonore extrait est effectuée en tenant compte des angles de polarisation de l'émetteur (7) et du récepteur (8) par rapport à l'axe longitudinal de la section de rail (1).

3. Procédé selon la revendication 2, **caractérisé en ce que** la détermination de la température neutre est effectuée avec des angles de polarisation réglés de manière fixe.

4. Procédé selon la revendication 2, **caractérisé en ce que** la détermination de la température neutre est effectuée avec des angles de polarisation variables à l'intérieur d'une plage d'angles de 0° à 90°.
